Europäisches Patentamt

European Patent Office

Office européen des brevets

(11) Publication number: 0 608 656 A2

# EUROPEAN PATENT APPLICATION

(21) Application number: 93480223.2

(22) Date of filing: 15.12.93

(51) Int. Cl.5: G06K 9/68, G06K 9/18

(30) Priority: 29.01.93 US 10922

(43) Date of publication of application:
03.08.94 Bulletin 94/31

(84) Designated Contracting States:
DE FR GB

(71) Applicant: International Business Machines
Corporation
Old Orchard Road
Armonk, N.Y. 10504(US)

(72) Inventor: Fitzpatrick, Gregory P.
3400 Western Centre Boulevard 2010
Forth Worth, Texas 76137(US)
Inventor: Williams, Marvin L.
1152 Settlers Way
Lewisville, Texas 75067(US)

(74) Representative: de Pena, Alain
Compagnie IBM France
Département de Propriété Intellectuelle
F-06610 La Gaude (FR)

(54) Method and apparatus for optical character recognition utilizing combinatorial hypothesis testing.

(57) A method and apparatus for optical identification an unknown character among a plurality of known characters. Each character is color coded and comprised of at least one geometric feature, a predominate color, and a nonpredominant color. A probability of a first identity among a number known characters for the unknown character is generated in response to an examination of at least one geometric feature of the unknown character is generated. A probability of a second identity among the known characters for the unknown character is generated in response to an examination of the predominate color and nonpredominant color of the unknown character. A predicted identity for the unknown character is then determined utilizing the greater of the probability of the first identity and the probability of the second identity.

Fig. 3

## BACKGROUND OF THE INVENTION

### 1. Technical Field:

The present invention relates in general to optical character recognition, and in particular to a method and apparatus for optical character recognition of characters having different color attributes. Still more particularly, the present invention relates to a method and apparatus for optical character recognition of characters having different color attributes utilizing both geometric optical character recognition and color coded optical character recognition techniques.

### 2. Description of the Related Art:

Optical character recognition (OCR) is a technique for character recognition that employs optical means to identify graphic characters. Devices such as an optical scanner or an optical reader may be utilized to input data into a data processing system for analysis or processing. "Scanning" of a document typically produces a bit map, which is a pixel-by-pixel representation of the overall image in a binary form. The bit map may be manipulated utilizing, for example, a painting application or image-editing software package. On the other hand, if the bit map image contains text, the text cannot be edited or accessed utilizing a word processing program or a spreadsheet application, since those applications do not recognize text in the form of bit mapped data. Typically, word processing or spreadsheet application packages recognize letters and numbers by utilizing a code called American Standard Code for Information Interchange (ASCII). Consequently, if a user desires to manipulate text in a bit map form, the scanned text must be converted into a form that is editable by a word processing or spreadsheet application package. Optical character recognition (OCR) technology is often employed to translate bit mapped text into a format that may be utilized by a word processing or spreadsheet application.

Conventional OCR techniques fall into two major categories: (1) geometric OCR or (2) color coded OCR. The first technique, Geometric OCR attempts to recognize a character based on the character's shape or the geometric representation of a set of pixels or dots. A "character", as utilized herein, is meant to include a printed or written symbol that may be recognized by an OCR device, such as an optical scanner or reader, or by a human reader. The character may be an alphabetical symbol or an icon. Furthermore, the terms "pixel" and "dot" are utilized interchangeably herein to describe a distinguishable point recognizable by an OCR device. In a geometric OCR approach, color is utilized only to define the shape of a character. Even if characters are represented by multiple colors, the multiple colors are converted to either black or a gray scale before shape analysis occurs. Although the geometric OCR approach may provide a recognition accuracy as high as 99.5%, character recognition errors still occur due to character shape defects and character shape variations. Character shape defects may take the form of smudged characters or improperly formed characters. Character shape variations may take the form of character fonts other than those character fonts that the OCR device is designed to recognize.

The second OCR technique, color coded OCR, attempts to recognize a character based on the character's color. In such an approach, colored pixels are employed not only to indicate the shape of a character, but also to indicate the identity of the character. For example, an "A" is printed red, "B" is printed blue, and "C" is printed yellow. Color coded OCR techniques are not subject to the shape processing errors typically found with geometric OCR techniques because color coded OCR techniques do not perform shape processing. Color coded OCR techniques, however, may be subject to color processing errors. Such color processing errors may take the form of ink color shifts, improper color density, improper color intensity, or color optical scanner misalignment.

Therefore, it would be desirable to have a method and system for OCR that can increase the accuracy rate of OCR techniques while overcoming both the shape processing error deficiency of geometric OCR techniques and the color processing error deficiency of color coded OCR techniques.

## SUMMARY OF THE INVENTION

It is therefore one object of the present invention to provide an improved method and system for optical character recognition.

It is another object of the present invention to provide a method and apparatus for optical recognition of characters having different color attributes.

It is yet another object of the present invention to provide a method and apparatus for optical character recognition of characters having different color attributes utilizing both geometric optical character recognition and color coded optical character recognition techniques.

The foregoing objects are achieved as is now described. The present invention permits the optical identification of an unknown character among a plurality of known characters. Each character is color coded and comprised of at least one geometric feature, a predominate color, and a nonpredominant color. The method and apparatus of the present invention includes the generation of a probability of a first identity among a number known characters for the unknown character, in response to an examination of at least one geometric feature of the unknown character. A probability of a second identity among the known characters for the unknown character is generated in response to an examination of the predominate color and nonpredominant color of the unknown character. A predicted identity for the unknown character is then determined utilizing the greater of the probability of the first identity and the probability of the second identity.

BRIEF DESCRIPTION OF THE DRAWINGS

Figure 1 is a pictorial representation of a data processing system that may be utilized to implement a method and system of the present invention;

Figure 2 depicts a block diagram of selected components of the data processing system illustrated in Figure 1 in which a preferred embodiment of the present invention may be implemented;

Figure 3 depicts a color coded technique of representing characters in accordance with a preferred embodiment of the present invention; and

Figure 4 is a flowchart illustrating a method and system for recognizing characters utilizing geometric and color criteria in accordance with a preferred embodiment of the present invention.

DETAILED DESCRIPTION OF PREFERRED EMBODIMENT

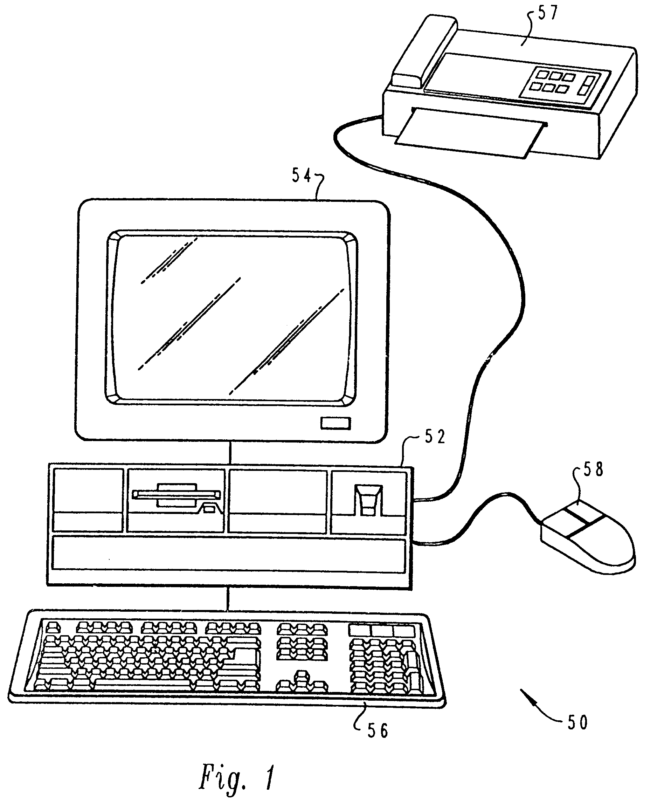

With reference now to the figures and in particular with reference to Figure 1, there is depicted a pictorial representation of a data processing system in which the present invention may be implemented in accordance with a preferred embodiment of the present invention. A personal computer 50 is depicted which includes a system unit 52, a video display terminal 54, a keyboard 56, a color optical scanner 57, and a mouse 58. Personal computer 50 may be implemented utilizing any suitable computer such as an IBM PS/2 computer, a product of International Business Machines Corporation, located in Armonk, New York. "PS/2" is a registered trademark of International Business Machines Corporation, located in Armonk, New York. Although the depicted embodiment involves a personal computer, a preferred embodiment of the present invention may be implemented in other types of data processing systems, such as for example, intelligent work stations or mini-computers.

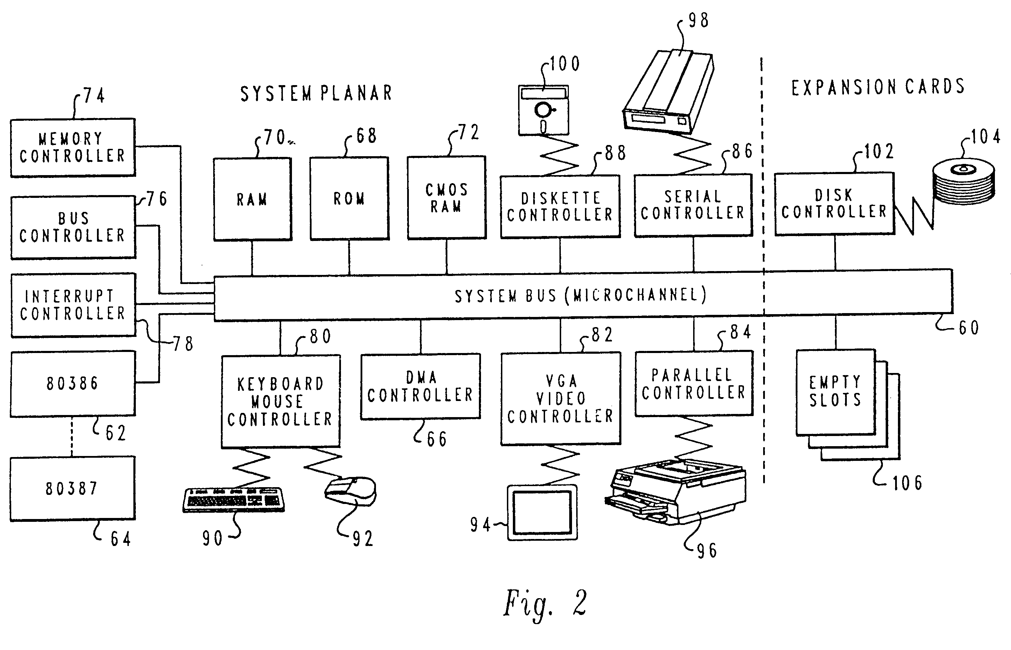

Referring now to Figure 2, there is depicted a block diagram of selected components in personal computer 50 in which a preferred embodiment of the present invention may be implemented. System unit 52 preferably includes a system bus 60 for interconnecting and establishing communication between various components in system unit 52. Microprocessor 62 is connected to system bus 60 and also may have numeric coprocessor 64 connected to it. System bus 60 may be a Micro Channel system bus from International Business Machines Corporation. "Micro Channel" is a registered trademark of International Business Machines Corporation. Direct memory access (DMA) controller 66 is also connected to system bus 60 and allows various devices to appropriate cycles from microprocessor 62 during large I/O transfers.

Read Only Memory (ROM) 68 and Random Access Memory (RAM) 70 are also connected to system bus 60. ROM 68 contains the power-on self test (POST) and the Basic Input/Output System (BIOS) which control hardware operations, such as those involving disk drives and the keyboard. Read only memory (ROM) 68 is mapped into the microprocessor 62 address space in the range from 640K to 1 megabyte. CMOS RAM 72 is attached to system bus 60 and contains system configuration information.

Also connected to system bus 60 are memory controller 74, bus controller 76, and interrupt controller 78 which serve to aid in the control of data flow through system bus 60 between various peripherals, adapters, and devices. System unit 52 also contains various input/output (I/O) controllers such as: keyboard and mouse controller 80, video controller 82, parallel controller 84, serial controller 86, and diskette controller 88. Keyboard and mouse controller 80 provide a hardware interface for keyboard 90 and mouse 92. Video controller 82 provides a hardware interface for video display terminal 94. Parallel controller 84 provides a hardware interface for devices such as printer 96. Serial controller 86 provides a hardware interface for devices such as a modem 98. Diskette controller 88 provides a hardware interface for floppy disk unit 100. Expansion cards also may be added to system bus 60, such as disk controller 102, which provides a hardware interface for hard disk unit 104. Empty slots 106 are provided so that other peripherals, adapters, and devices may be added to system unit 52. Empty slots 106 may include an adapter for controlling a scanning device, such as color optical scanner 57.

Those skilled in the art will appreciate that the hardware depicted in Figure 2 may vary for specific applications. For example, other peripheral devices such as: optical disk media, audio adapters, or chip programming devices such as a PAL or EPROM programming device, and the like also may be utilized in addition to or in place of the hardware already depicted.

The present invention allows for the combination of color criteria and geometric criteria for identifying unknown characters. A technique of interlacing the attributes of predominant colored pixels within an unknown character with OCR distinguishable nonpredominant colored pixels is employed in accordance with a preferred embodiment of the present invention. The nonpredominant colored pixels need only be distinguishable by the OCR device or program and need not be distinguishable by human perception, in accordance with a preferred embodiment of the present invention. In such an application, characters may be perceived as a single color.

Preferably, the amount of interlaced nonpredominant color and/or the combinations of colors within an unknown character may be utilized to determine the identity of the unknown character. A nonpredominant color may be utilized as an attribute for recognizing the unknown character and may be applied to as many characters as colors that are recognizable by the OCR device or program, in accordance with a preferred embodiment of the present invention. Combinations of colors also may be utilized and applied to as many characters as color combinations are available.

The present invention utilizes these techniques for determining the identity of an unknown character and coupling that information with the nonpredominant color information to formulate a sampling hypothesis test. In accordance with a preferred embodiment of the present invention, a proposition, also called a hypothesis, is established for each unknown character from normal geometric information about the identity of the unknown character and based on the color attributes of the unknown character.

For example, the geometric and color analysis of the unknown character may have yielded a 90% confidence rate that a particular unknown character is an "A". The proposition establishes that the symbol is a letter "A" or that the unknown character is not a letter "A". Given that there is currently a 90% level of confidence that the unknown character is the letter "A", the proposition that the unknown character is a letter "A" becomes the null hypothesis. Under this approach, geometric and color information may be analyzed to determine what confidence factors are obtained. The hypothesis having the greatest probability is selected from the hypotheses generated from geometric and color information. For example, if geometric information establishes a 90% level of confidence that the unknown character is a letter "A" and the color coded information establishes a 70% level of confidence that the unknown character is a letter "N", the hypothesis that the unknown is a letter "A" is selected for further analysis. Given the example, a method in accordance with a preferred embodiment of the present invention would determine that the unknown being examined is in "A", if the 90% confidence level is above a selected threshold level for the given application. Utilizing H0 as the null hypothesis and H1 as the alternative hypothesis, the OCR logic for the example can be stated as follows:

$$H\,0 < 0.9$$
$$H\,1 \geq 0.9$$

wherein, 0.9 is the threshold level that may be selected for the application. Thi s formulation states that the conclusion (H0) reached via the combination of both geometric and color analysis about the identity of an unknown character will be accepted unless the threshold confidence level for the given application requires a higher confidence level. Additionally, other threshold resolution techniques may be employed for color OCR analysis of the unknown character that is under observation, in accordance with a preferred embodiment of the present invention. For example, Dynamic Threshold Algorithms and other techniques known to those skilled in the art may be utilized to identify the color attribute of a particular character.

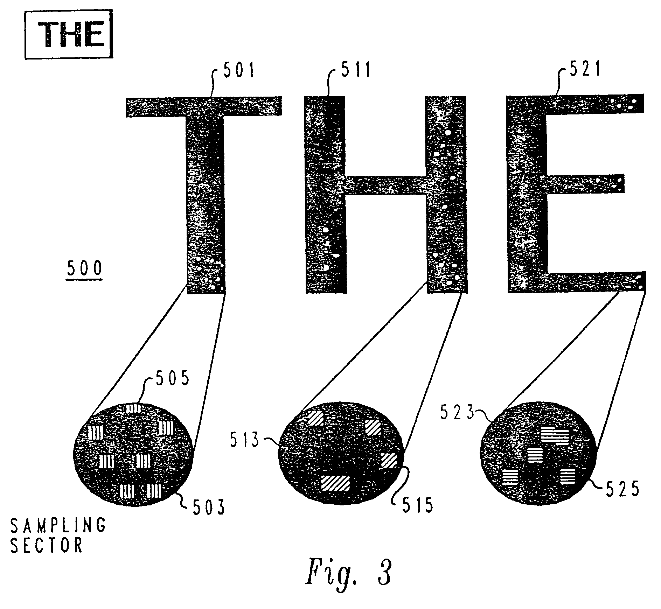

Referring next to Figure 3, a representation of the word "THE", composed of three characters "T" 501, "H" 511, and "E" 521 in the sampling sector 500, in accordance with a preferred embodiment of the present invention is depicted. In the predominant and nonpredominant color coded technique, each character is represented by a predominant color associated with the unknown character and a nonpredominant color associated with the unknown character. The predominant color is readily distinguishable by humans. The nonpredominant color is associated, interlaced, intermingled, or embedded within the predominant color. The nonpredominant color is preferably nondistracting to humans but distinguishable by a color scanner. For example, the bodies of the characters "T" 501, "H" 511, and "E" 521 are all composed of a predominant color; i.e., black. The predominant color, black, is distinguishable by the human reader, and the characters appear black to a human reader.

The exploded view 503 of a portion of the body of the character "T" 501 illustrates a nonpredominant color 505, which may comprise the color red associated with character "T" 501. The nonpredominant color 505 is nondistracting to humans, but distinguishable by a color scanner. Nonpredominant color 505 is also associated, interlaced, intermingled, or embedded within the predominant color, black. The exploded view 513 of a portion of the body of the character "H" 511 illustrates a nonpredominant color 515, which may comprise the color brown associated with the character "H" 511. As above, the nonpredominant color 515 is nondistracting to humans, but distinguishable by a color scanner. Nonpredominant color 515 is also associated, interlaced, intermingled, or embedded predominant color, black. The exploded view 523 of a portion of the body of the character "E" 521 illustrates a nonpredominant color 525, which may comprise the color blue associated the character "E" 521. The nonpredominant color 525 is nondistracting to humans, but distinguishable by a color scanner. The nonpredominant color 525 also is associated, interlaced, intermingled, or embedded with the predominant black.

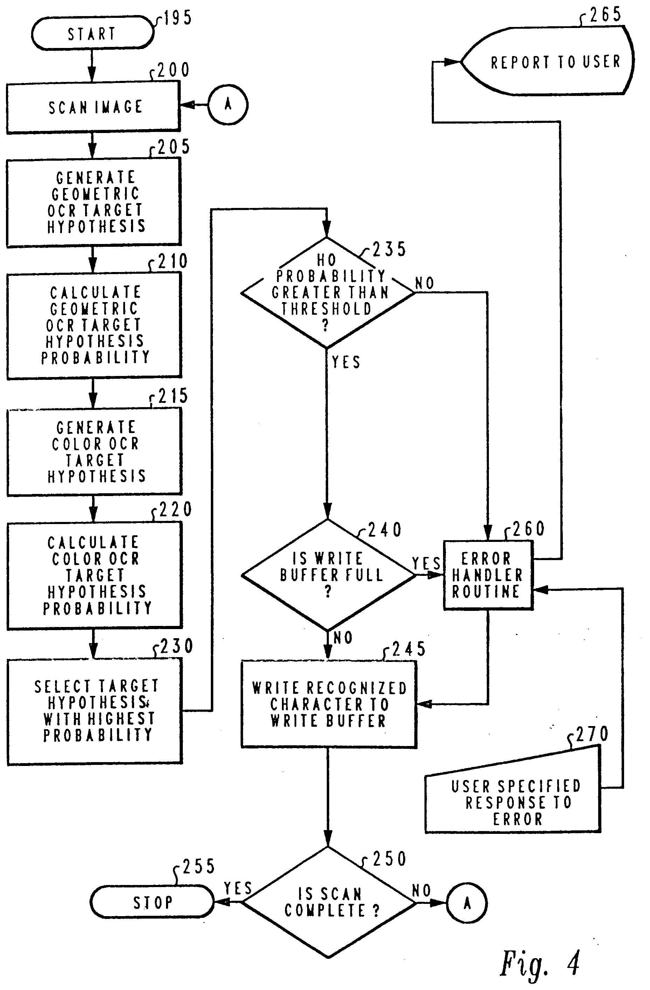

Referring now to Figure 4, a flowchart illustrating a method and system for recognizing unknown characters utilizing geometric and color criteria, in accordance with a preferred embodiment of the present invention, is depicted. The process begins in block 195 and thereafter proceeds to block 200. Block 200 illustrates the scanning of a portion of an image which may or may not contain recognizable characters. Scanning may be accomplished by a color scanner in accordance with a preferred embodiment of the present invention.

Thereafter, the process proceeds to block 205, which depicts the generation of a geometric OCR target hypothesis based on the geometric features of the unknown character. A hypothesis is generated for a unknown character and is comprised of a null hypothesis (H0) and an alternative hypothesis (H1) may be generated for the unknown character in accordance with a preferred embodiment of the present invention. For example, the hypothesis may be whether or not the symbol is an "A". The null hypothesis may be, for example, that the unknown character is an "A". The alternative hypothesis may be, for example, that the unknown character is not an "A". The process then proceeds to block 210. Block 210 illustrates the calculation of a geometric OCR target hypothesis probability of an unknown character within the portion of the image being a particular target character. For example, a 90% probability of H0 and a 10% probability of H1. The process in block 210 further calculates these probabilities for other potential target characters.

Although only two hypotheses, H0 and H1, are generated in the depicted embodiment, other hypotheses and probabilities may be generated for a symbol in accordance with a preferred embodiment of the present invention. For example, the process in block 210 may further calculate that there is a 30% probability that the unknown character is a "B", a 5% probability that the unknown character is a "C", etc. The process then proceeds to block 215, which depicts the generation of a color OCR target hypothesis. Again a null hypothesis that the unknown character is recognized as an "A" and an alternative hypothesis that the unknown character is not an "A".

Thereafter, the process proceeds to block 220. Block 220 illustrates the calculation of a color OCR target hypothesis probability for both the null hypothesis and the alternative hypothesis. For example, the process in block 220 may calculate that there is a 99% probability that the unknown character is an "A" and a 1% probability that the unknown character is not an "A". The process then proceeds to block 230, which illustrates the selection of the target hypothesis with the highest probability calculated in block 210 and 220. Afterward, the process proceeds to block 235, which depicts a determination of whether the selected probability of H0 is greater than the threshold level. The threshold level may be set, for example, at 90% to indicate that the null hypothesis is accepted, unless there is overwhelming evidence (90% or greater probability) in favor of the alternative hypothesis. In other words, if the confidence level, indicated by the probability of the null hypothesis, is greater than the threshold level, the null hypothesis is accepted.

If the probability of the null hypothesis is greater than the threshold, the process proceeds to block 240. Block 240 depicts a determination of whether or not the write buffer is full. The write buffer is the buffer in which the program writes a sequence of recognized characters in accordance with a preferred embodiment of the present invention. If the write buffer is not full, the process then proceeds to block 245, which depicts the writing of the recognized character register to the write buffer. Thereafter, the process proceeds to block 250. Block 250 illustrates a determination of whether or not the scan is complete. If the scan is complete, the process terminates in block 255 as illustrated. If, however, the scan is incomplete the process returns to block 200 for further scanning of the image.

Referring back to block 240, if the write buffer is full, the process proceeds to block 260, which depicts the processing of the exception by an error or exception handler routine well known to those skilled in the art. A default process of the error handler routine in block 355 is to transfer the contents of the write buffer to an output file, and to clear the write buffer. The error handler routine may also report the error to a user through output device 360. In lieu of the default action, the process in block 260 may execute a user specified response to an error, such as designating an output file as specified by the user through input device 365. Thereafter, the process returns to block 245 for the writing of the recognized character to the right buffer. Referring again to block 235, if the probability of the null hypothesis is not greater than the threshold, the process also proceeds to block 260 for handling of the error.

**Claims**

1. A method in a data processing system of optically identifying an unknown character among a plurality of known characters, wherein each character is color coded and comprised of at least one geometric feature, a predominate color, and a nonpredominant color, said method comprising the data processing system implemented steps of:

   generating a hypothesis of a first identity among said plurality of known characters for said unknown character in response to an examination of said at least one geometric feature;

   generating a hypothesis of a second identity among said plurality of known characters for said unknown character in response to an examination of said nonpredominant color; and

   determining an identity for said unknown character utilizing said first hypothesis of a first identity and said second hypothesis of a second identity.

2. The method in a data processing system of optically identifying an unknown character among a plurality of known characters according to claim 1, wherein said step of generating a hypothesis of a first identity comprises:

   generating a null hypothesis that said unknown character has said first identity and an alternative hypothesis that said unknown character has an identity other than said first identity; and

   wherein said step of generating a hypothesis of a second identity comprises:

   generating a null hypothesis that said unknown character has said second identity and an alternative hypothesis that said unknown character has an identity other than said second identity.

3. The method in a data processing system of optically identifying an unknown character among a plurality of known characters according to claim 2, wherein said step of determining an identity for said unknown character comprises:

   determining a probability of said hypothesis of a first identity; and

   determining a probability of said hypothesis of a second identity.

4. The method in a data processing system of optically identifying an unknown character among a plurality of known characters according to claim 3, wherein said step of determining an identity for said unknown character further comprises:

   selecting a hypothesis from the greater of said probability of said hypothesis of a first identity and said probability of said hypothesis of a second identity.

5. The method in a data processing system of optically identifying an unknown character among a plurality of known characters according to claim 4, wherein said step of determining an identity for said unknown character further comprises:

   choosing said null hypothesis associated with said selected hypothesis if said probability of said selected hypothesis is greater than a threshold; and

   choosing said alternative hypothesis associated with said selected hypothesis if said probability of said selected hypothesis is less than or equal to said threshold.

6. A data processing system for optically identifying an unknown character among a plurality of known characters, wherein each character is color coded and comprised of at least one geometric feature, a predominate color, and a nonpredominant color, said data processing system comprising:

   generation means for generating a hypothesis of a first identity among said plurality of known characters for said unknown character in response to an examination of said at least one geometric feature;

   generation means for generating a hypothesis of a second identity among said plurality of known characters for said unknown character in response to an examination of said nonpredominant color; and

   determination means for determining an identity for said unknown character utilizing said first hypothesis of a first identity and said second hypothesis of a second identity.

7. The data processing system of claim 6, wherein said generation means for generating a hypothesis of a first identity comprises:

   generation means for generating a null hypothesis that said unknown character has said first identity and an alternative hypothesis that said unknown character has an identity other than said first identity; and

wherein said generation means for generating a hypothesis of a second identity comprises:

generation means for generating a null hypothesis that said unknown character has said second identity and an alternative hypothesis that said unknown character has an identity other than said second identity.

8. The data processing system of claim 7, wherein said determination comprises:

determination means for determining a probability of said hypothesis of a first identity; and

determination means for determining a probability of said hypothesis of a second identity.

9. The data processing system of claim 8, wherein said determination means for determining an identity for said unknown character further comprises:

selection means for selecting a hypothesis from the greater of said probability of a hypothesis of a first identity and said probability of a hypothesis of a second identity.

10. The data processing system of claim 9, wherein said determination means for determining an identity for said unknown character further comprises:

means for choosing said null hypothesis associated with said selected hypothesis if said probability of said selected hypothesis is greater than a threshold; and

means for choosing said alternative hypothesis associated with said selected hypothesis if said probability of said selected hypothesis is less than or equal to said threshold.

Fig. 1

SYSTEM PLANAR

EXPANSION CARDS

74 MEMORY CONTROLLER

76 BUS CONTROLLER

INTERRUPT CONTROLLER

80386

62

80387

64

70 RAM

68 ROM

72 CMOS RAM

100

98

88 DISKETTE CONTROLLER

86 SERIAL CONTROLLER

102 DISK CONTROLLER

104

SYSTEM BUS (MICROCHANNEL)

60

78

80 KEYBOARD MOUSE CONTROLLER

DMA CONTROLLER 66

82 VGA VIDEO CONTROLLER

84 PARALLEL CONTROLLER

EMPTY SLOTS

106

90

92

94

96

*Fig. 2*

EP 0 608 656 A2

Fig. 3

Fig. 4